# EUROPEAN PATENT APPLICATION

(11) **EP 2 259 012 A1**
(43) Date of publication of application: **08.12.2010**
(21) Application number: 09721343.3
(22) Date of filing: 17.03.2009
(51) Int. Cl.: G01B 11/24, H05K 7/20

(54) **SHAPE MEASURING DEVICE AND ROBOT DEVICE WITH THE SAME**

(30) Priority: 19.03.2008 JP 2008072318
(71) Applicant: Kabushiki Kaisha Yaskawa Denki, Kitakyushu-shi, Fukuoka 806-0004 (JP)
(72) Inventor: OSHIMA, Mikio, 806-0004 Fukuoka (JP); MATSUZAKI, Mitsuhiro, 806-0004 Fukuoka (JP); MAEZAWA, Hiroyuki, 806-0004 Fukuoka (JP)
(74) Representative: Gendron, Vincent Christian
(86) International application number: PCT/JP2009/055097
(87) International publication number: WO 2009/116508

(57) **Abstract**

A housing including a base (1) and cover (11) has an open space (22) open to the atmosphere and a closed space (21) closed to the atmosphere. The open space (22) contains a laser (7) having a low operating temperature. The closed space (21) contains a heat generating element (4) and the like, which have higher operating temperatures than the laser (7). The heat generating element (4) is in close contact with the base (1), which also serves as a heatsink, so that the heat generating element (4) is cooled. Most parts of a motor (15), which is a heat generating member, are disposed in the closed space. A fan (6) is diagonally disposed with respect to side surfaces of the heat generating element, which has a rectangular shape and flat side surfaces, so as to efficiently blow air toward the heat generating element (4) disposed in the closed space.

## Description

### Technical Field

The present invention relates to a shape measuring apparatus including a laser disposed in a housing, and to a robot apparatus including the shape measuring apparatus mounted on a movable unit.

### Background Art

Shape measuring apparatuses used at production sites in which dust and particulates are present have closed structures, because dust may enter the shape measuring apparatuses and may cause short circuits between components mounted on a circuit board. Because heat accumulates in a closed structure, a unit having a closed structure tends to have a large size. Therefore, various attempts have been made to provide a small closed structure.
Examples of existing technologies related to the structure of a unit for containing a circuit board, a motor, and the like include an optical disc subsystem (see Patent Document 1) that includes a heat generating member that is exposed to the outside so as to provide a closed structure while suppressing an increase in the temperature of the inside of the unit, and a laser processing machine (see Patent Document 2) in which a heat exchanger with internal and external fans is disposed and a heatsink of a servo amplifier, which is a heat generating component, is exposed to the outside and cooled with a fan disposed outside the machine so as to provide a closed structure while suppressing an increase in the temperature of the inside of the machine.

Fig. 9 illustrates a unit structure of the existing technology of Patent Document 1. In Fig. 9, a housing 50 of a unit is divided into two chambers with a sill plate 52, and a power supply 53 is disposed in one of the chambers. The power supply 53 is cooled with a vent hole 54 formed in a side plate of the chamber of the housing 50.
Fig. 10 illustrates a unit structure of the existing technology of Patent Document 2. In Fig. 10, a heat exchanger 56 is disposed on a control board 55. The heat exchanger 56 includes a heat conducting plate 57 made by corrugating a thin plate, which is disposed between an external fan 58 and an internal fan 59, so that heat is exchanged and inside air near the control board 55 is cooled. Moreover, a servo amplifier 60, which is a heat generating component, has a heatsink portion 61 that is exposed to outside air and is directly cooled with a cooling fan 62 that is disposed at the center of the servo amplifier 60.
[Patent Document 1] Japanese Unexamined Patent Application Publication No. 08-102180
[Patent Document 2] Japanese Patent Publication No. 07-22872

### Disclosure of Invention

### Problems to be Solved by the Invention

The existing unit structures have the following problems.
(1) In the case of Patent Document 1, because the power supply 53 is in the environment of outside air, dust and particulates may enter the power supply 53. Moreover, a cable inlet has a complex dustproof structure, which increases the cost.
(2) In the case of Patent Document 2, because the external fan 58, the heat conducting plate 57, and the heatsink portion 61 are in the environment of outside air, the heat conducting plate 57 and the heatsink portion 61 become dusty due to sucking in of dust and particulates. As a result, the thermal efficiency decreases, the life of the external fan is reduced, and frequent maintenance services, such as cleaning and replacement, are necessary.

An object of the present invention, which has been achieved in order to solve the problems described above, is to provide a shape-measuring apparatus in which an increase in the temperature of a closed space in a housing due to heat generated in the space is suppressed and that is not affected by dust and particulates. Another object of the present invention is to provide a robot apparatus including the shape measuring apparatus mounted on a movable unit. Means for Solving the Problems

In order to solve the problems described above, according to the present invention, a shape measuring apparatus includes a housing including a base and a cover, and a laser disposed in the housing, wherein the housing has an open space that is open to the atmosphere and a closed space that is closed to the atmosphere, wherein the open space contains the laser, and wherein the closed space contains a substrate, a heat generating element mounted on the substrate, a heat conducting sheet that transfers heat generated by the heat generating element to the base, a rotatable mirror that reflects the laser beam, a mirror shaft that supports the mirror, a lens and a camera that detect a shape of an object irradiated with the laser beam emitted from the mirror, and a fan that cools contents in the housing.

### Advantages

The present invention has the following advantages.
(1) According to the inventions described in Claims 1 to 5, a laser, which has a low operating temperature, is contained in a laser box that has an open portion, and a vent hole is formed in a cover that covers the laser box so that the vent hole matches with the open portion of the laser box. Therefore, the shape measuring apparatus can be used in the environment of ambient temperature, which is lower than the temperature of the closed space.
   The heat generating element is in close contact with the base, which also serves as a heatsink, with a heat conducting sheet therebetween. Therefore, heat that is generated by the heat generating element is cooled by the base and the temperature of the closed space of the housing can be lowered.
(2) According to the invention described in Claim 6, a fan is diagonally disposed so as to blow air toward the heat generating element. Therefore, an increase in the temperature of the heat generating element is suppressed and an increase in the temperature in a part of the closed space in the housing can be prevented.
(3) According to the inventions described in Claims 7 and 8, a laser holder is attached to the inside of the laser box. Therefore, a laser can be securely positioned and fixed when attaching the laser to the laser box. The laser holder is disposed so as to face the opening, so that the laser can be easily attached.
(4) According to the invention described in Claim 9, a motor shaft of a motor is connected to the mirror shaft, and at least a part of a body of the motor is disposed outside the housing, i.e., outside the closed space. Therefore, the amount of heat that is generated by the motor and transferred to the closed space is reduced as far as possible and an increase in the temperature of the closed space can be prevented.
(5) According to the inventions described in Claims 10 and 11, the shape measuring apparatus is mounted on a robot apparatus. Therefore, the shape measuring apparatus can be easily moved to a desired position. Moreover, the angle between the object to be measured and the shape measuring apparatus can be easily set and adjusted, so that measuring operation can be efficiently performed.
(6) According to the inventions described in Claims 12 to 14, the robot apparatus includes a handling unit for holding an object to be measured. Therefore, for example, a product that is being conveyed on a conveyer can be measured using the shape measuring apparatus and readily held using the handling unit.

### Brief Description of Drawings

[Fig. 1] Fig. 1 is a front view of a shape measuring apparatus according to a first embodiment of the present invention.
[Fig. 2] Fig. 2 is a plan view of the shape measuring apparatus of Fig. 1.
[Fig. 3] Fig. 3 is a plan view of the shape measuring apparatus of Fig. 2 from which a cover is removed.
[Fig. 4] Fig. 4 is a front view of the shape measuring apparatus of Fig. 1, in which the cover and a motor cover is cut to illustrate an internal structure.
[Fig. 5] Fig. 5 is a front view of Fig. 4, in which a laser box is cut to illustrate an internal structure.
[Fig. 6] Fig. 6 is a sectional view taken along line A-A of Fig. 3.
[Fig. 7] Fig. 7 is a side view of a robot apparatus according to a second embodiment of the present invention, which includes the shape measuring apparatus according to the first embodiment.
[Fig. 8] Fig. 8 is an enlarged view of a region surrounding a wrist of the robot apparatus of Fig. 7.

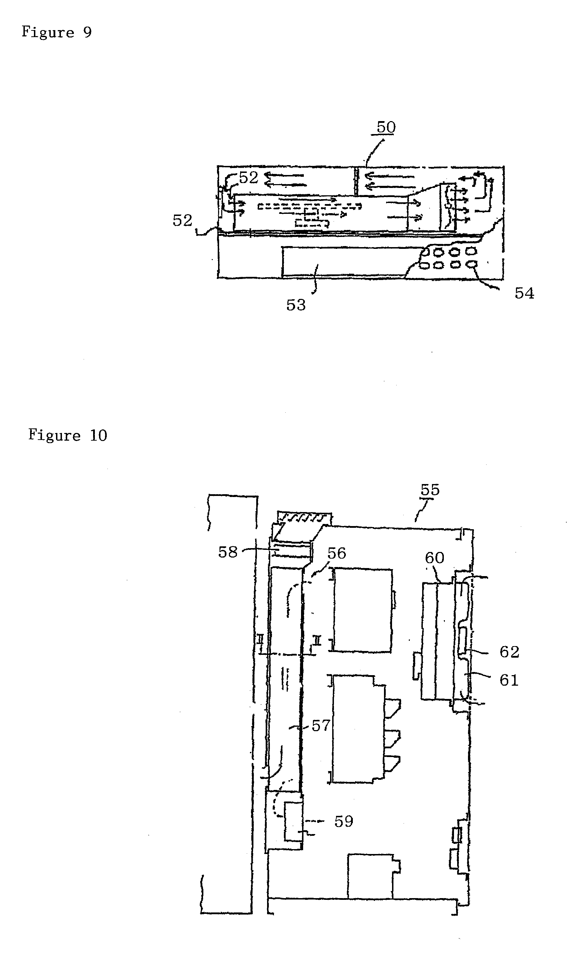

[Fig. 9] Fig. 9 is an explanatory view of a first existing technology.
[Fig. 10] Fig. 10 is an explanatory view of a second existing technology.

### Reference Numerals

- S: shape measuring apparatus
- 1: base
- 1a: vent hole
- 2, 2a: stud
- 3, 3a: substrate
- 4, 4a: heat generating element
- 5: heat conducting sheet
- 6: fan
- 7: laser
- 7a: cable
- 8: laser holder
- 9: laser box
- 9a: opening
- 9b: vent hole
- 9c: vent hole
- 9d: laser attachment hole
- 9e: laser attachment hole
- 10: connector plate
- 11: cover
- 11a: vent hole
- 11b: vent hole
- 12: packing
- 13: mirror
- 14, 14a: acrylic plate
- 15: motor
- 16: motor base
- 17: lens
- 18: camera
- 19: mirror shaft
- 20: motor cover
- 21: closed space
- 22: open space
- R: robot apparatus
- 23: fixed unit
- 24: movable unit
- 24a: rotating base
- 24b: vertical arm
- 24c: horizontal arm
- 24d: wrist
- 24e: handling unit
- 24f: joint
- 24g: joint
- 25: attachment member
- 27, 28, 29,: 30axis

### Best Modes for Carrying Out the Invention

Hereinafter, embodiments of the present invention will be described with reference to the drawings.

### [First Embodiment]

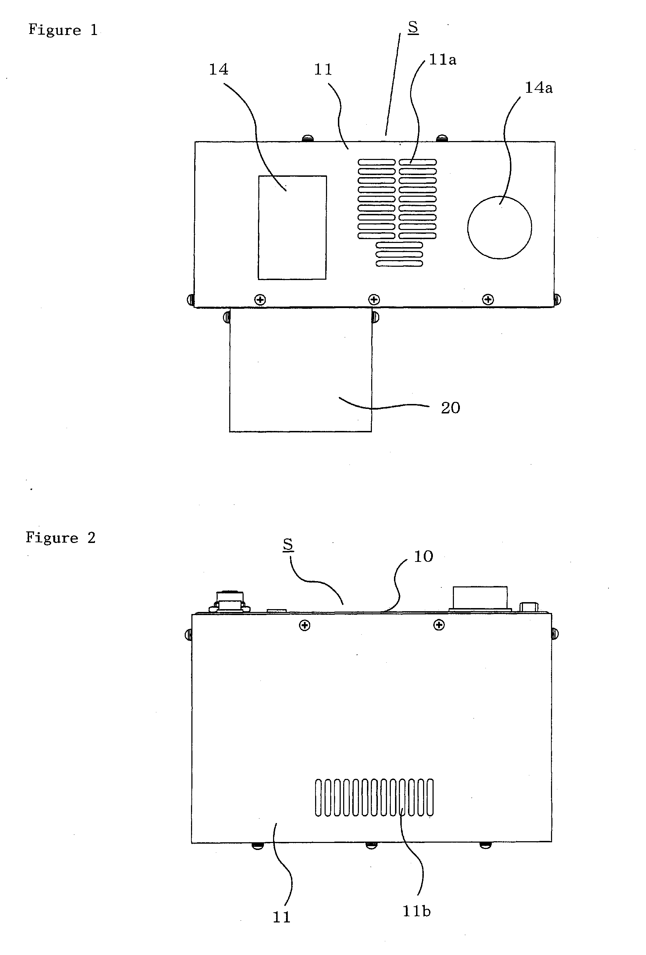

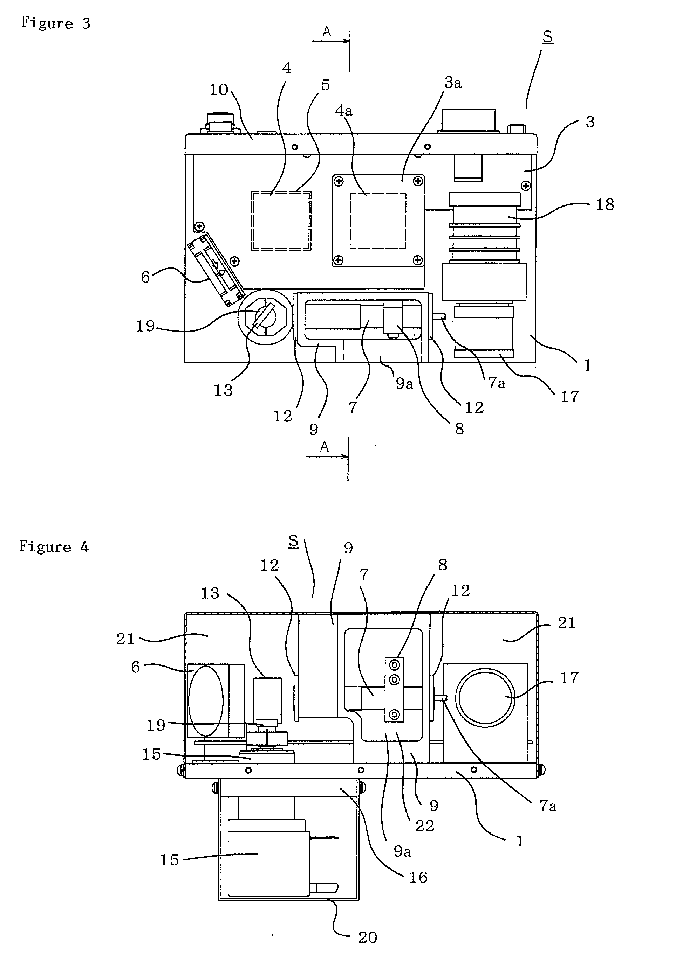

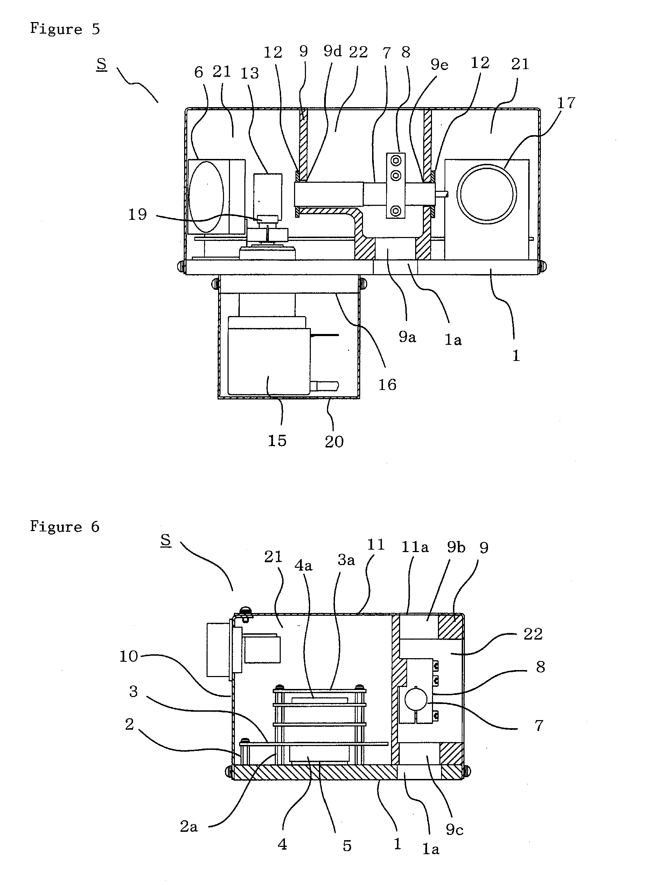

Fig. 1 is a front view of a shape measuring apparatus according to a first embodiment of the present invention. Fig. 2 is a plan view of the shape measuring apparatus of Fig. 1. Fig. 3 is a plan view of the shape measuring apparatus of Fig. 2 from which a cover is removed. Fig. 4 is a front view of the shape measuring apparatus of Fig. 1, in which the cover and a motor cover is cut to illustrate an internal structure. Fig. 5 is a front view of Fig. 4, in which a laser box is cut to illustrate an internal structure. Fig. 6 is a sectional view taken along line A-A of Fig. 3.

In Figs. 1 to 6, a shape measuring apparatus S, a base 1, a vent hole 1a, studs 2 and 2a, substrates 3 and 3a, heat generating elements 4 and 4a, a heat conducting sheet 5, a fan 6, a laser 7, a cable 7a, a laser holder 8, a laser box 9, an opening 9a, vent holes 9b and 9c, laser attachment holes 9d and 9e, a connector plate 10, a cover 11, vent holes 11a and 11b, a packing 12, a mirror 13, acrylic plates 14 and 14a, a motor 15, a motor base 16, a lens 17, a camera 18, a mirror shaft 19, a motor cover 20, a closed space 21, and an open space 22 are illustrated.

The substrate 3 is attached to the base 1 with the studs 2 therebetween. The heat generating element 4, which is mounted on the substrate 3, is disposed between the base 1 and the substrate 3. The heat generating element 4 is in close contact with the base 1 with the heat conducting sheet 5 therebetween. The heat generating element 4 is in close contact with the base 1 and cooled by dissipating heat to the base 1, which also serves as a heatsink. The substrates 3a are stacked on the substrate 3 with the studs 2a therebetween. The heat generating element 4a is mounted on one of the substrates 3a. The fan 6 is disposed diagonally on the base 1 so as to cool the heat generating element 4a and prevent an increase in the temperature of a part of the closed space 21. That is, the heat generating elements 4 and 4a have rectangular shapes with flat side surfaces, and the fan 6 is diagonally disposed on the base 1 so as to blow air at an angle toward the side surfaces of the heat generating elements 4 and 4a.

The laser 7 is clamped by the laser holder 8 and attached to the laser attachment holes 9d and 9e in the laser box 9. The laser box 9 has the open space 22, which contains the laser 7, the opening 9a, which is connected to the open space 22 through the front side, the vent hole 9b, which is connected to the open space 22 through the upper side, and the vent hole 9c, which is connected to the open space 22 through the lower side. The lower surface of the laser box 9 is attached to the base 1. The base 1 has the vent hole 1a formed in a portion that is in contact with the vent hole 9c in the laser box 9. The vent hole 1a has the same size or substantially the same size as the vent hole 9c. The connector plate 10 is attached to an end surface of the base 1. The cover 11, which covers the entire apparatus, is in close contact with the base 1, the connector plate 10, and the laser box 9. The cover 11 has the vent holes 11a and 11b, which have circular or elongated circular shapes, in a portion of the cover 11 that is in contact with the vent holes 9b and 9c in the laser box 9, which is in close contact with the cover 11. The laser 7 is fitted into the laser attachment holes 9d and 9e that are formed in the laser box 9. The gap is sealed with the packing 12.

Using the shape measuring apparatus having the structure described above, the shape of an object is measured as follows.
The object to be measured is placed in front of the lens 17 with the acrylic plate 14a therebetween. In this case, the object to be measured may be placed, for example, on a measuring stage that is fixed or on a conveyer that is moving.
The laser 7 emits a laser beam. The laser beam is reflected by the mirror 13, passes through the acrylic plate 14 attached to the cover 11, and is incident on the object to be measured. The mirror 13 is rotated by the motor 15 so as to irradiate the object to be measured with the laser beam. The motor 15 is attached to the base 1 with the motor base 16 therebetween. The laser beam, with which the object has been irradiated, passes through the acrylic plate 14a attached to the cover 11, passes through the lens 17, and is detected by the camera 18. The mirror 13 is bonded to the mirror shaft 19 and attached to an output shaft of the motor 15. The motor 15 is covered with the motor cover 20 that is fitted to the motor base 16.

The substrates 3 and 3a, which are attached to the base 1, the mirror 13, the lens 17, the camera 18, and the like are disposed in the closed space 21, which is formed by the base 1, the connector plate 10, the laser box 9, and the cover 11. Thus, entry of dust and particulates from the outside is prevented. Most parts of the motor 15 are disposed outside the closed space 21, so that an increase in the temperature of the closed space 21 due to heat generated by the motor 15 can be suppressed.
The laser 7 has a low operating temperature. Therefore, if the laser 7 were disposed in the closed space 21, the temperature of the laser would exceed the operating temperature. The body of the laser 7, excluding the distal end portion from which a laser beam is emitted and a proximal end portion from which a cable extends, is disposed in the open space 22 of the laser box 9. The front side, the upper side, and the lower side of the laser 7 are open spaces, so that outside air flows into the open spaces and the ambient temperature of the laser 7 is approximately the same as the temperature of outside air. Therefore, the laser 7 is not used above the operating temperature. When the laser 7 generates heat, the laser 7 is cooled by outside air, which has a temperature lower than that of the laser, so that the heat is not transferred to the closed space 21.

With such a structure, the space containing the mirror, the substrate, and the like is closed, so that dust and particulates do not enter the space. Thus, the mirror is not covered with dust, the life of the fan is increased, and short circuits on the substrate and the like can be prevented. It is not necessary to lower the operating temperature of the unit in order to use a laser having a low operating temperature.

### [Second Embodiment]

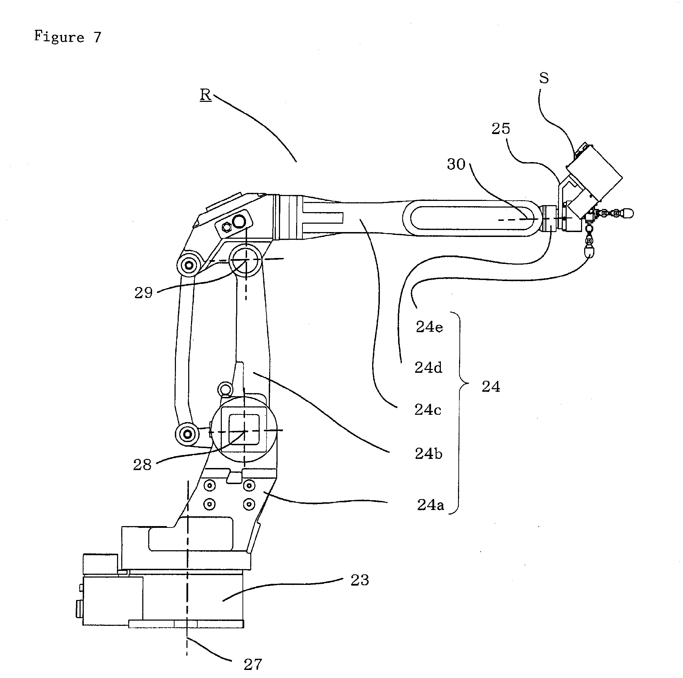

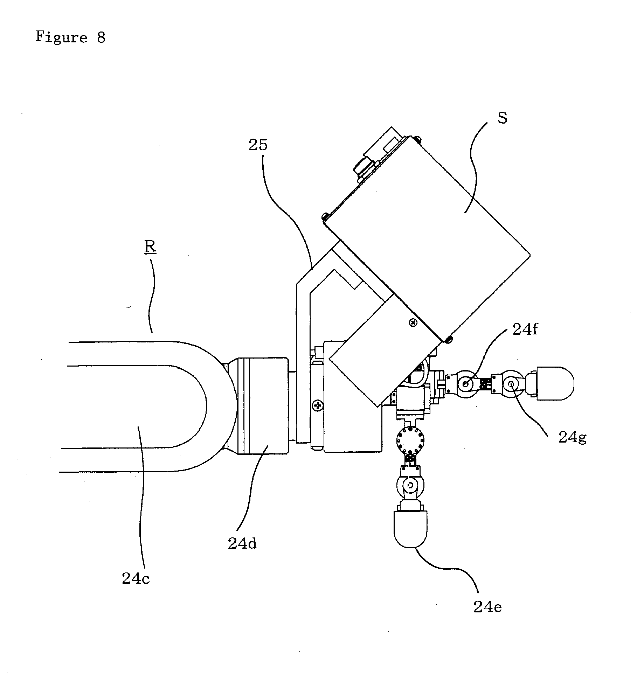

Fig. 7 is a side view of a robot apparatus according to a second embodiment of the present invention, which includes the shape measuring apparatus according to the first embodiment. Fig. 8 is an enlarged view of a region surrounding a wrist of the robot apparatus of Fig. 7.

The shape measuring apparatus S according to the first embodiment can be mounted on a robot apparatus R and used.
As illustrated in Figs. 7 and 8, the robot apparatus R, for example, includes a fixed unit 23 and a movable unit 24.
The fixed unit 23 includes, for example, a fixed base. The movable unit 24, for example, includes a rotating base 24a that is connected to the fixed unit 23 so as to be rotatable around an axis 27, a vertical arm 24b connected to the rotating base 24a so as to be rotatable around an axis 28 in forward and backward directions, a horizontal arm 24c connected to the vertical arm 24b so as to be rotatable around an axis 29 in upward and downward directions, a wrist 24d connected to the distal end of the horizontal arm 24c so as to be rotatable around an axis 30, and a handling unit 24e attached to the wrist 24d. The handling unit 24e includes three movable fingers, and one of the fingers has two joints 24f and 24g. The number of joints may be one. As long as the handling unit 24e can hold an object to be measured, the handling unit 24e may have any structure instead of the structure including three movable fingers.
The shape of an object is measured using the shape measuring apparatus mounted on the robot apparatus R as follows.
The shape measuring apparatus S, which measures the shape of the object, is moved to the position of the object. This is done by rotating the rotating base 24a, directing the shape measuring apparatus S toward the object to be measured, rotating the vertical arm 24b in the forward or backward direction, rotating the horizontal arm 24c in the upward or downward direction, and extending or contracting an arm.
When the shape measuring apparatus S reaches the position of the object to be measured, the laser 7 emits a laser beam and the shape measuring apparatus measures the shape of the object. Then, the joints 24f and 24g of the three fingers of the handling unit 24e move and hold the object on the basis of the positional information.
Thus, by mounting the shape measuring apparatus S on the robot apparatus R, the shape measuring apparatus S can be easily moved to any appropriate position. The angle between the object to be measured and the shape measuring apparatus S can be easily set and adjusted, whereby measuring operation can be efficiently performed.
Because the robot apparatus R includes the handling unit 24e for holding the object to be measured, for example, an object that is being conveyed on a conveyer can be handled by measuring the shape of the object using the shape measuring apparatus S and by immediately moving the two joints of the handling unit 24e.

### Industrial Applicability

The present invention can be used in the technical field related to suppressing an increase in the temperature of a closed space in a housing and producing and providing a shape measuring apparatus that is not affected by dust and particulates.

## Claims

1. A shape measuring apparatus comprising a housing including a base and a cover, and a laser disposed in the housing, the laser emitting a laser beam,
wherein the housing has an open space that is open to the atmosphere and a closed space that is closed to the atmosphere,
wherein the open space contains the laser, and
wherein the closed space contains a substrate, a heat generating element mounted on the substrate, a heat conducting sheet that transfers heat generated by the heat generating element to the base, a rotatable mirror that reflects the laser beam, a mirror shaft that supports the mirror, a lens and a camera that detect a shape of an object irradiated with the laser beam emitted from the mirror, and a fan that cools contents in the housing.

2. The shape measuring apparatus according to Claim 1,
wherein the base is a heatsink.

3. The shape measuring apparatus according to Claim 1,
wherein the heat generating element mounted on the substrate is in close contact with the base with a heat conducting sheet therebetween.

4. The shape measuring apparatus according to Claim 1,
wherein the open space is formed by a laser box disposed in the housing, and the laser box has an opening and laser attachment holes, the opening being formed in a portion that is not in contact with the closed space, the laser attachment holes being formed in portions that are in contact with the closed space, the laser attachment holes receiving two ends of the laser in an axial direction of the laser.

5. The shape measuring apparatus according to Claim 1,
wherein a vent hole is formed in a portion of the cover that is in contact with the open space.

6. The shape measuring apparatus according to Claim 1,
wherein the heat generating element has a rectangular shape with flat side surfaces, and the fan is diagonally disposed on the base so as to blow air at an angle toward the side surfaces of the heat generating element.

7. The shape measuring apparatus according to Claim 4,
wherein a laser holder for fixing a portion of the laser between the two ends in the axial direction is attached to an inside of the laser box.

8. The shape measuring apparatus according to Claim 4,
wherein the laser holder is disposed so as to face the opening.

9. The shape measuring apparatus according to Claim 1,
wherein a motor shaft of a motor is connected to the mirror shaft, and at least a part of a body of the motor is disposed outside the housing.

10. A robot apparatus comprising:
a movable unit disposed on a fixed unit; and
the shape measuring apparatus according to any one of Claims 1 to 9, the shape measuring apparatus being mounted on the movable unit.

11. The robot apparatus according to Claim 10,
wherein the movable unit includes at least one movable arm and a wrist provided at a distal end of the movable arm, and the shape measuring apparatus is mounted on the wrist.

12. The robot apparatus according to Claim 11,
wherein the wrist includes a handling unit for holding an object to be measured.

13. The robot apparatus according to Claim 12,
wherein the handling unit includes at least three movable fingers.

14. The robot apparatus according to Claim 13,
wherein each of the movable fingers includes at least one joint.
